# FASCICULE DE BREVET EUROPEEN

(11) **EP 1 967 716 B1**
(45) Date de publication et mention de la délivrance du brevet: **18.05.2016**
(21) Numéro de dépôt: 08151972.0
(22) Date de dépôt: 27.02.2008
(51) Int. Cl.: F02C 7/143, F02K 3/115

(54) **Moteur d'aéronef équipé de moyens d'échange thermiques**
Motor eines Luftschiffs, das mit Wärmeaustauschmitteln ausgestattet ist
Aircraft engine equipped with heat exchange system

(30) Priorité: 27.02.2007 FR 0753516
(43) Date de publication de la demande: 10.09.2008
(73) Titulaire: SNECMA, 75015 Paris (FR)
(72) Inventeur: BRAULT, Michel, 91480, Quincy Sous Senart (FR); ROUSSELIN, Stéphane, 77850, Hericy (FR); TANTOT, Nicolas, 75012, Paris (FR); TOURET, Roxane, 75012, Paris (FR)
(74) Mandataire: Intès, Didier Gérard André

(56) Documents cités:
- EP-A- 0 911 505
- EP-A- 0 924 409
- FR-A- 2 400 618
- FR-A- 2 482 196
- US-A- 6 134 880

## Description

La présente invention concerne un moteur d'aéronef équipé de moyens d'échange thermiques.

On sait que dans le cadre notamment d'un moteur d'aéronef de type standard, l'abaissement de la température du flux primaire circulant dans les étages de compression du moteur permet pour une technologie de compresseur donnée soit de réduire la consommation du moteur, soit de réduire les émissions de polluants tel que les oxydes d'azote (NOx). En effet, si on veut maintenir la température initiale, il est alors possible d'augmenter le taux de compression global (OPR anglo-saxon) ce qui permet de réduire la consommation en carburant ou si l'on choisit de maintenir le taux de compression global, l'abaissement de la température permet une réduction en émission de polluants NOx.

On a déjà tenté de diminuer la température du flux primaire en utilisant un échangeur thermique. C'est par exemple ce qui est décrit dans le EP 1 555 406 ou le US 4 254 618. Dans les deux cas, on prélève une partie du flux primaire en amont du compresseur haute pression et on le fait circuler dans un échangeur thermique monté dans la veine de flux secondaire et on restitue l'air refroidi à l'entrée du compresseur haute pression. Cependant, cette disposition ne permet pas d'obtenir une diminution de température réellement satisfaisante.

Le document FR 2 482 196 décrit des moyens d'échange thermique conformes au préambule de la revendication 1.

Un objet de la présente invention est de fournir un moteur d'aéronef équipé d'un échangeur thermique qui permet effectivement d'améliorer l'abaissement de température du flux primaire grâce à l'utilisation d'un échangeur thermique.

Pour atteindre ce but, selon l'invention, le moteur d'aéronef est selon la revendication 1.

On comprend que, comme l'échangeur thermique est disposé dans le circuit de flux primaire d'air en amont du compresseur haute pression c'est l'intégralité du flux d'air primaire qui traverse cet échangeur avant de pénétrer dans le compresseur haute pression. Cela permet d'obtenir une diminution sensible de la température du flux primaire à l'entrée du compresseur HP. De plus, comme la prise d'air pour alimenter le circuit froid de l'échangeur thermique est constitué par des conduites dont le diamètre est nécessairement réduit, on a une accélération du flux.

Ledit échangeur thermique est annulaire et présente le même axe de révolution que le moteur. On comprend qu'ainsi l'échangeur thermique peut être facilement monté dans le moteur sans modifier significativement la structure de celui-ci.

De préférence, les premières extrémités ouvertes des conduites des moyens de prise d'air sont configurées pour prélever environ 10% du flux d'air secondaire total.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une demi-vue simplifiée en coupe longitudinale d'une partie du moteur d'aéronef équipé de l'échangeur thermique selon l'invention ; et
- la figure 2 est une vue similaire à celle à la figure 1 montrant un mode détaillé de mise en oeuvre de l'invention.

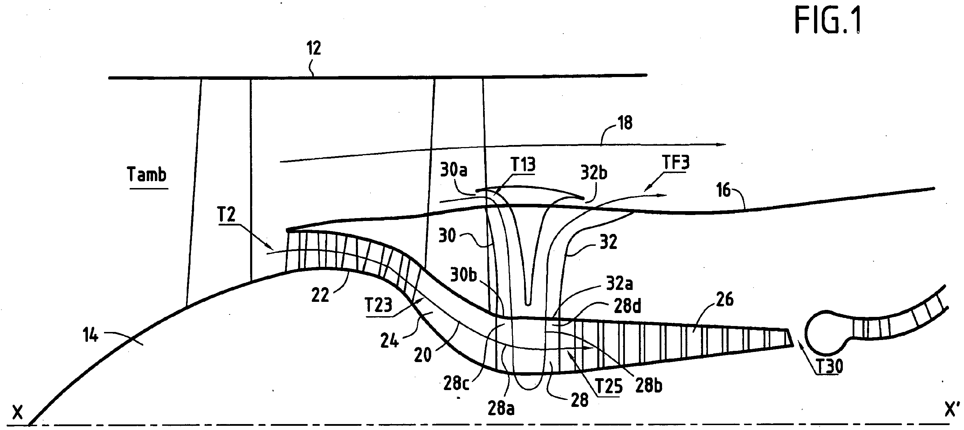

En se référant tout d'abord à la figure 1, on va décrire le principe de l'invention. Sur cette figure, on a fait apparaître la partie antérieure du moteur de l'aéronef qui est de révolution autour de l'axe longitudinal XX'. Sur cette figure, on a encore fait apparaître une manche à air 12 et un carter avant 14 ainsi qu'un carter de nacelle 16. Ces carters ainsi que la manche à air 12 définissent d'une part un circuit de flux secondaire 18 et d'autre part un circuit de flux d'air primaire 20.

De façon connue, le flux d'air primaire 20 suit un circuit comprenant un compresseur basse pression 22, un carter intermédiaire 24 et un compresseur haute pression 26. Selon une caractéristique essentielle de l'invention, un échangeur thermique 28, de préférence de forme annulaire, est interposé dans ce circuit de flux primaire entre le carter intermédiaire 24 et l'entrée du compresseur haute pression 26. L'échangeur thermique 28 comporte bien sûr un circuit primaire chaud 28a et un circuit secondaire froid 28b. Le circuit primaire chaud 28a de l'échangeur thermique est parcouru par l'intégralité du flux primaire d'air. Le circuit secondaire froid 28b de l'échangeur thermique 28 est alimenté par de l'air prélevé dans le circuit de flux secondaire 18. Sur cette figure purement de principe, on a représenté des conduites de prélèvement 30 dont l'extrémité 30a débouche dans le circuit de flux secondaire d'air 18 et dont l'autre extrémité 30b est raccordée à l'entrée 28c du circuit secondaire froid 28b de l'échangeur thermique 28. De la même manière, le flux d'air prélevé dans le circuit de flux secondaire est réinjecté dans ce circuit par des conduites telles que 32 dont une extrémité 32a est raccordée à la sortie 28d du circuit secondaire de l'échangeur thermique 28 et dont la deuxième extrémité 32b débouche dans le circuit de flux secondaire 18. Comme on l'expliquera ultérieurement, en relation avec des modes préférés de mise en oeuvre de l'invention; les extrémités de prélèvement de flux secondaire 30a et les extrémités 32b de restitution du flux secondaire sont définies de telle manière qu'elles perturbent le moins possible le flux d'air secondaire 18.

Sur cette figure de principe, on a représenté les différentes températures que l'on peut obtenir en différents points des circuits de flux primaire et secondaire grâce à la mise en oeuvre de l'invention. A l'entrée du circuit de flux secondaire, on a la température ambiante qui est par exemple de 303 degrés Kelvin ; la température T2 à l'entrée du compresseur basse pression 22 est par exemple égale à 307 degrés Kelvin ; la température T23 à la sortie du compresseur basse pression 22 est égale à 403 degrés Kelvin ; la température T13 à l'entrée 30a des moyens de prélèvement dans le flux secondaire est égale à 340 degrés Kelvin, la température TF3 à la sortie des moyens de réinjection d'air dans le flux secondaire est égale à 373 degrés Kelvin. Il faut souligner que la température T25 à la sortie du circuit primaire de l'échangeur thermique 28 c'est-à-dire la température du flux primaire d'air à l'entrée du compresseur HP est ramenée à 373 degrés Kelvin. Cela représente un abaissement très significatif de 30 degrés Kelvin par rapport à une situation dans laquelle un échangeur thermique 28 n'aurait pas été monté. On a également indiqué que la température T30 à la sortie du compresseur haute pression 26 était égale à 901 degrés Kelvin.

Comme on l'a expliqué précédemment, l'abaissement de température du flux primaire que l'on obtient grâce à la mise en place de l'échangeur thermique conformément à l'invention peut être exploité de deux manières différentes. Dans le cas de la figure 1, on utilise cet abaissement de température pour réduire la température en sortie du compresseur haute pression et diminuer ainsi le taux de rejet d'oxydes d'azote.

Ainsi qu'on l'a déjà expliqué, l'abaissement de température du flux primaire dû à la présence de l'échangeur thermique 28 aurait pu être exploité pour augmenter le taux de compression globale de l'ensemble moteur notamment le taux de compression du compresseur haute pression 26 afin de diminuer la consommation du moteur représenté sur la figure 1, tout en maintenant constante la température en sortie de compresseur.

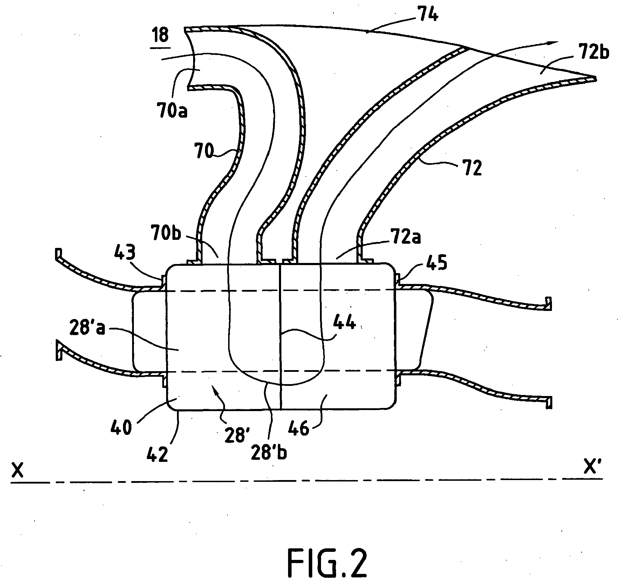

En se référant maintenant à la figure 2, on va décrire un mode détaillé de réalisation de l'invention.

Dans ce mode de réalisation, l'échangeur thermique porte la référence numérique 28'. L'échangeur thermique 28', qui est de forme générale annulaire, est constitué, pour son circuit primaire chaud 28'a, de tubes 40 disposé de façon annulaire à l'intérieur du carter 42 de l'échangeur 28'. Le flux primaire d'air circule ainsi dans les tubes 40 parallèles à l'axe XX' et l'intégralité du flux primaire traverse donc l'échangeur. L'échangeur comporte également un circuit secondaire 28'b qui est défini à l'intérieur du carter 42 par une chicane rayonnante 44 et par une boîte de distribution 46. Le flux secondaire d'air qui alimente le circuit secondaire de l'échangeur est prélevé dans le circuit de flux secondaire 18.

De préférence, le carter 42 de l'échangeur thermique 28' est fixé par des brides 43 et 45 sur la sortie du carter intermédiaire 24 et sur l'entrée du compresseur HP 26.

Le prélèvement dans la veine de flux d'air secondaire 18 est réalisé à l'aide "d'écopes" qui constituent l'extrémité de conduites raccordées à l'entrée de l'échangeur thermique. Ces conduites et ces écopes sont angulairement régulièrement réparties dans le circuit de flux secondaire d'air autour de l'axe XX' du moteur.

Sur cette figure 2, on a donc représenté une conduite d'alimentation de l'échangeur en air secondaire 70 dont l'extrémité 70a constitue une "écope" et qui est sensiblement orthogonale à l'axe XX' du moteur. L'autre extrémité de cette conduite 70 référencée 70b est raccordée à l'entrée du circuit secondaire de l'échangeur thermique 28'. De manière similaire, à chaque conduite d'alimentation 70 est associée une conduite de restitution 72 dont l'extrémité 72b débouche dans le circuit de flux secondaire d'air et dont l'extrémité 72a est raccordée à la sortie du circuit secondaire froid de l'échangeur thermique 28". Les conduites de prélèvement 70 sont dimensionnées de telle manière que la section de son extrémité de prélèvement 70a multipliée par le nombre de conduites 70 représente environ 10 % de la section du circuit de flux secondaire d'air. En outre, de préférence, une tôle sensiblement cylindrique 74 est solidaire d'une part de l'extrémité 70a des conduites de prélèvement 70 et d'autre part de l'extrémité d'un bord des conduites 72 afin de régulariser l'écoulement du flux secondaire dans le circuit de flux secondaire d'air.

Il faut relever que, compte tenu du fait que les conduites de prélèvement 70 avec leurs écopes 70a ne prélèvent qu'environ 10% du flux secondaire total, cette situation fait que l'on obtient dans les conduites de prélèvement 70 et de restitution 72 une accélération du flux d'air circulant dans ces conduites.

## Revendications

1. Moteur d'aéronef comprenant :
un carter avant (14) et un carter de nacelle (16) situé radialement à l'extérieur du carter avant (14),
un circuit de flux primaire d'air (20) défini entre le carter avant (14) et le carter de nacelle (16),
un compresseur haute pression (26) alimenté par ledit flux primaire,
un circuit de flux secondaire d'air (18) défini entre le carter de nacelle (16) et une manche à air (12) située radialement à l'extérieur dudit carter de nacelle (16),
au moins un échangeur thermique (28, 28') monté dans le circuit de flux primaire d'air en amont dudit compresseur haute pression (26), ledit échangeur comprenant un circuit secondaire froid (28b, 28'b) et un circuit primaire chaud (28a, 28'a), ledit circuit primaire chaud étant alimenté par l'air dudit circuit de flux primaire d'air et ledit circuit secondaire froid (28b) étant alimenté par l'air du circuit de flux secondaire (18), l'entrée (28c) du circuit secondaire froid de l'échangeur (28, 28') étant raccordé à des moyens de prise (30a) d'air disposés dans le circuit de flux secondaire d'air, de révolution autour de l'axe dudit moteur et la sortie (28d) du circuit froid de l'échangeur thermique étant raccordée à des moyens de réinjection (32b) de l'air dans ledit circuit de flux secondaire, de révolution autour de l'axe dudit moteur,
ledit moteur étant **caractérisé en ce que** les moyens de prise d'air sont constitués par les premières extrémités ouvertes (70a) de premières conduites (70, 72) dont les deuxièmes extrémités (70b, 72a) sont raccordées audit échangeur (28') et les moyens de réinjection d'air sont constitués par les premières extrémités ouvertes (72b) de deuxièmes conduites (72) dont les deuxièmes extrémités (72a) sont raccordées audit échangeur (28'), lesdites premières extrémités ouvertes (70a, 72b) étant angulairement régulièrement réparties par rapport à l'axe du moteur, et **en ce que** ledit échangeur thermique (28, 28') est annulaire et présente le même axe de révolution que le moteur.

2. Moteur selon la revendication 1, **caractérisé en ce que** ledit échangeur thermique (28, 28') est monté entre ledit compresseur haute pression (26) et un carter intermédiaire (24) disposé dans ledit circuit de flux primaire d'air (20), en amont du compresseur haute pression.

3. Moteur selon l'une quelconque des revendications 1 à 2, **caractérisé en ce que** les premières extrémités ouvertes (70a) des conduites (70) desdits moyens de prise d'air sont configurées pour prélever environ 10 % du flux d'air secondaire total.

## Patentansprüche

1. Motor eines Luftschiffs, umfassend:
eine Vorderverkleidung (14) und eine Gondelverkleidung (16), die radial außerhalb der Vorderverkleidung (14) liegt,
einen Luftprimärstromkreislauf (20), der zwischen der Vorderverkleidung (14) und der Gondelverkleidung (16) definiert ist,
einen Hochdruckkompressor (26), der von dem Primärstrom versorgt wird,
einen Luftsekundärstromkreislauf (18), der zwischen der Gondelverkleidung (16) und einem Windsack (12), der radial außerhalb der Gondelverkleidung (16) liegt, definiert ist,
mindestens einen Wärmeaustauscher (28, 28'), der in dem Luftprimärstromkreislauf stromaufwärts des Hochdruckkompressors (26) installiert ist, wobei der Austauscher einen kalten Sekundärkreislauf (28b, 28'b) und einen warmen Primärkreislauf (28a, 28'a) umfasst, wobei der warme Primärkreislauf von Luft des Luftprimärstromkreislaufs versorgt wird, und der kalte Sekundärkreislauf (28b) von Luft des Luftsekundärstromkreislaufs (18) versorgt wird, wobei der Eingang (28c) des Sekundärkreislaufs des Wärmeaustauschers (28, 28') an Lufteinlassmittel (30a) angeschlossen ist, die in dem Luftsekundärstromkreislauf mit Rotation um die Achse des Motors angeordnet sind, und der Ausgang (28d) des kalten Kreislaufs des Wärmeaustauschers an Rückeinspritzmittel (32b) der Luft in den Luftsekundärstromkreislauf mit Rotation um die Achse des Motors angeschlossen ist,
wobei der Motor **dadurch gekennzeichnet ist, dass** die Lufteinlassmittel aus den ersten offenen Enden (70a) der ersten Leitungen (70, 72) bestehen, deren zweite Enden (70b, 72a) an den Wärmeaustauscher (28') angeschlossen sind, und die Luftrückeinspritzmittel aus den ersten offenen Enden (72b) der zweiten Leitungen (72) bestehen, deren zweite Enden (72a) an den Wärmeaustauscher (28') angeschlossen sind, wobei die ersten offenen Enden (70a, 72b) winkelig regelmäßig in Bezug auf die Achse des Motors verteilt sind, und dass der Wärmeaustauscher (28, 28') ringförmig ist und dieselbe Rotationsachse wie der Motor aufweist.

2. Motor nach Anspruch 1, **dadurch gekennzeichnet, dass** der Wärmeaustauscher (28, 28') zwischen dem Hochdruckkompressor (26) und einer Zwischenverkleidung (24) montiert ist, die in dem Luftprimärstromkreislauf (20) stromaufwärts des Hochdruckkompressors angeordnet ist.

3. Motor nach einem der Ansprüche 1 bis 2, **dadurch gekennzeichnet, dass** die ersten offenen Enden (70a) der Leitungen (70) der Lufteinlassmittel ausgelegt sind, um etwa 10 % des gesamten Sekundärluftstroms zu entnehmen.

## Claims

1. An aeroengine comprising:
a front casing (14) and a nacelle casing (16) located radially outwardly of the front casing (14)
a primary air circuit (20) being defined between the front carter (14) and the nacelle casing (16);
a high-pressure compressor (26) fed by said primary air;
a secondary air circuit (18) defined between the nacelle carter (16) et an air sleeve (12) located radially outwardly of the nacelle casing (16);
at least one heat exchanger (28, 28') mounted in the primary air circuit upstream from the high-pressure compressor (26), said heat exchanger comprising a cold secondary circuit (28b, 28'b) and a hot primary circuit (28a, 28'a), said hot primary circuit being fed with air from said primary air circuit, and said cold secondary circuit (28b) being fed with air from the secondary air circuit (18), the inlet (28c) of the cold secondary circuit of the heat exchanger (28, 28') being connected to air intake means (30a) disposed in the secondary air circuit, symmetrically about the axis of said engine, and the outlet (28d) from the cold circuit of the heat exchanger being connected to means (32b) for reinjecting air into said secondary air circuit and disposed symmetrically about the axis of said engine;
said engine being **characterized in that** the air intake means are constituted by open first ends (70a, 72b) of first pipes (70, 72) having second ends (70b, 72a) connected to said heat exchanger (28'), and the air reinjection means are constituted by the open first ends (72b) of second pipes (72) which second ends (72a) are connected to said heat exchanger (28'), said open first ends (70a, 72b) being distributed angularly in regular manner relative to the axis of the engine and **in that** said heat exchanger (28, 28') is annular and presents the same axis of revolution as the engine.

2. An engine according to claim 1, **characterized in that** said heat exchanger (28, 28') is mounted between said high-pressure compressor (26) and an intermediate casing (24) disposed in said primary air circuit (20) upstream from the high-pressure compressor.

3. An engine according to any one of claims 1 to 2, **characterized in that** the open first ends (70a) of the pipes (70) of said air intake means are configured to take about 10% of the total secondary air stream.
